# EUROPÄISCHE PATENTANMELDUNG

(11) **EP 1 892 162 A2**
(43) Veröffentlichungstag der Anmeldung: **27.02.2008**
(21) Anmeldenummer: 07114255.8
(22) Anmeldetag: 13.08.2007
(51) Int. Cl.: B60R 21/34

(54) **Fußgängerschutz für ein Kraftfahrzeug**

(30) Priorität: 21.08.2006 DE 102006039163
(71) Anmelder: Euromotive GmbH & Co. KG, 5651 Lend (AT)
(72) Erfinder: Garnweidner, Peter, 5112 Lamprechtshausen (AT)
(74) Vertreter: Wilhelms . Kilian & Partner Patentanwälte

(57) **Zusammenfassung**

Fußgängerschutz für ein Kraftfahrzeug zum Schützen von Personen beim Zusammenstoß mit dem Kraftfahrzeug. Wenigstens ein Profilteil (2) mit wabenförmigem Querschnitt ist zwischen dem Bauteil des Kraftfahrzeuges, auf das eine Person beim Zusammenstoß mit dem Kraftfahrzeug aufprallt, insbesondere zwischen dem Kotflügel (1) und dem damit verbundenen Bauteil des Rahmens des Kraftfahrzeuges angeordnet und aus einem Aluminiumwerkstoff im weichgeglühten Zustand gefertigt.

## Beschreibung

Die Erfindung betrifft einen Fußgängerschutz für ein Kraftfahrzeug zum Schützen von Personen beim Zusammenstoß mit dem Kraftfahrzeug.

Bei einem Zusammenstoß zwischen Personen, insbesondere Fußgängern und einem Kraftfahrzeug wird üblicherweise das Unfallgeschehen in drei Aufprallzonen, nämlich den Beinbereich, den Hüftbereich und den Kopfbereich der Person unterteilt.

Der Beinaufprall erfolgt im Wesentlichen im Bereich des Stoßfängers des Kraftfahrzeuges, der Hüftaufprall erfolgt insbesondere im Bereich der so genannten Schlossanbindungen, z.B. der Anbindung des Schlosses der Frontklappe oder der Motorhaube an dem Rahmen des Kraftfahrzeuges und der Kopfaufprall hat in den Scheibenwischern, im Bereich der Motorhaube, in dem der Motorblock unmittelbar darunter liegt, und in der Anbindung der Kotflügel an den oberen Hilfslängsträger, d.h., den Längsträger unmittelbar unter der Fuge zwischen dem Kotflügel und der Motorhaube seine wesentlichen Gefahrenstellen.

Die vorliegende Erfindung befasst sich mit einem Fußgängerschutz, der die aufprallende Person beim Hüftaufprall und beim Kopfaufprall schützen soll.

Insbesondere problematisch ist bei einem derartigen Aufprall die Anbindung des Kotflügels an den Hilfslängsträger, weil dieser bei Fahrzeugen immer steifer ausgeführt wird, da sich daraus eine homogene Steifigkeit des Vorderteils des Kraftfahrzeuges ergibt.

Da die vorderen Karosserieteile, beispielsweise die Kotflügel und die Frontklappe nicht nur Energie absorbierend wirken sollen, sondern in anderen Belastungsrichtungen für den Normalgebrauch steif ausgeführt sein sollten, ergeben sich hier weitere Anforderungen. Dabei sind insbesondere Sogkräfte beim Fahren und seitliche Kräfte am Kotflügel zu berücksichtigen, die beim Anlehen von Personen am Fahrzeug entstehen können.

Abgesehen von diesen flächigen Anbindungen, z.B. der Kotflügel an den Rahmen des Kraftfahrzeuges sind auch punktuelle Anbindungsstellen, wie z.B. die Schlossanbindung der Motorhaube Problemzonen. Das Problem liegt hierbei neben den Einbauverhältnissen darin, dass in der zur Verformungsrichtung entgegengesetzten Richtung Sogkräfte auftreten, so dass bei einem entsprechenden Aufprallschutz verschiedene Kraftniveaus bei einer Zug- und einer Druckbeanspruchung erforderlich sind.

Es ist diesbezüglich bekannt, bei der Anbindung der Kotflügel an den Rahmen des Kraftfahrzeuges verformbare Blechlaschen vorzusehen. Der Nachteil dieser Konstruktion liegt jedoch in der geringen Torsionssteifigkeit, die sich bei Kräften, die seitlich wirken und beispielsweise durch das Anlehen einer Person am Fahrzeug hervorgerufen werden, negativ auswirken.

Ein weiterer Nachteil der bekannten Konstruktion ist die geringe Energieaufnahme. Insbesondere beim Kopfaufprall ist ein möglichst rechteckiger Kraft-Weg-Verlauf in Schutzrichtung wichtig.

Ein weiteres Problem ergibt sich daraus, dass die Masse des Kopfes bei Kindern und Erwachsenen stark unterschiedlich ist, wobei gegenwärtig von einer Masse des Kopfes eines Erwachsenen von 4,5 kg und der Masse des Kopfes eines Kindes derzeit von 3,5 kg und künftig von 2,5 kg ausgegangen wird. Da die Verletzungsschwere in HIC gemessen wird und der HIC-Wert eine Funktion der Verzögerung ist, ergibt sich bei einem Verformungselement, wie beispielsweise einer verformbaren Blechlasche mit nur einer Kraftstufe automatisch eine höhere Verzögerung bei geringerer Masse, d.h., bei dem Aufprall des Kopfes eines Kindes.

Die der Erfindung zugrunde liegende Aufgabe besteht daher darin, einen Fußgängerschutz für ein Kraftfahrzeug zu schaffen, der so gestaltet ist, dass die harten Verbindungsstellen zwischen den Karosserieteilen wie den Kotflügeln bzw. dem Frontdeckel oder der Motorhaube und dem Rahmen oder der Rohkarosserie des Fahrzeuges derart Energie absorbierend sind, dass die maximal zulässigen Werte für den Personenschutz, d.h., insbesondere der Kopfverzögerungen bzw. Hüftbelastungen nicht überschritten werden.

Diese Aufgabe wird gemäß der Erfindung durch die Ausbildung gelöst, die im Patentanspruch 1 angegeben ist.

Der erfindungsgemäße Fußgängerschutz für ein Kraftfahrzeug erfüllt die Anforderungen an die maximal zulässigen Werte bei einem Personenaufprall, insbesondere hinsichtlich der Kopfverzögerungen und Hüftbelastungen und hat darüber hinaus den Vorteil, dass der Bauraum möglichst klein, d.h., die Blocklänge möglichst gering ist, dass unterschiedliche Kraftniveaus für den Kopf eines Kindes und eines Erwachsenen vorgesehen werden können, dass ein hoher Wirkungsgrad, d.h., ein konstantes Kraftniveau über den Verformungsweg besteht, dass der Schutz alterungsbeständig ist, dass keine bzw. nur geringe abschätzbare Veränderungen beim Lackierprozess notwendig sind, die Funktion unabhängig von der Umgebungstemperatur, d.h., saisonunabhängig ist, im Reparaturfall ein leichter Austausch möglich ist, die Kotflügelanbindung torsionssteif ausgestaltet ist und in Zug- und Druckrichtung je nach Wunsch unterschiedliche Kraftniveaus vorgesehen sein können, was insbesondere bei punktuellen Anbindungsstellen wie der Schlossanbindungen, insbesondere der Anbindung des Motorhaubenschlosses von Bedeutung ist.

Besonders bevorzugte Weiterbildungen und Ausgestaltungen des erfindungsgemäßen Fußgängerschutzes sind Gegenstand der Patentansprüche 2 bis 9.

Im Folgenden werden anhand der zugehörigen Zeichnungen besonders bevorzugte Ausführungsbeispiele des erfindungsgemäßen Fußgängerschutzes näher beschrieben. Es zeigen
Fig. 1 eine Horizontalschnittansicht durch ein erstes Ausführungsbeispiel des erfindungsgemäßen Fußgängerschutzes zur Verwendung bei der Kotflügelanbindung,
Fig. 2 und 3 in Fig. 1 entsprechenden Schnittansichten zwei verschiedene Anordnungsmöglichkeiten des in Fig. 1 dargestellten Fußgängerschutzes,
Fig. 4 in einem Kraftverformungsdiagramm das typische Verformungsverhalten des in Fig. 1 dargestellten Fußgängerschutzes,
Fig. 5 eine Draufsicht auf den Vorderwagen eines Kraftfahrzeuges zur Darstellung der unterschiedlichen Aufprallbereiche des Kopfes eines Erwachsenen und eines Kindes,
Fig. 6 in einer Querschnittsansicht ein wabenförmiges Profilteil für ein Ausführungsbeispiel des erfindungsgemäßen Fußgängerschutzes für punktuelle Anbindungsstellen,
Fig. 7 in einer Fig. 6 entsprechenden Ansicht ein anderes Ausführungsbeispiel des wabenförmigen Profilteils für punktuelle Anbindungsstellen und
Fig. 8 ein weiteres Ausführungsbeispiel des erfindungsgemäßen Fußgängerschutzes für punktuelle Anbindungsstellen in Ansichten von zwei Seiten jeweils.

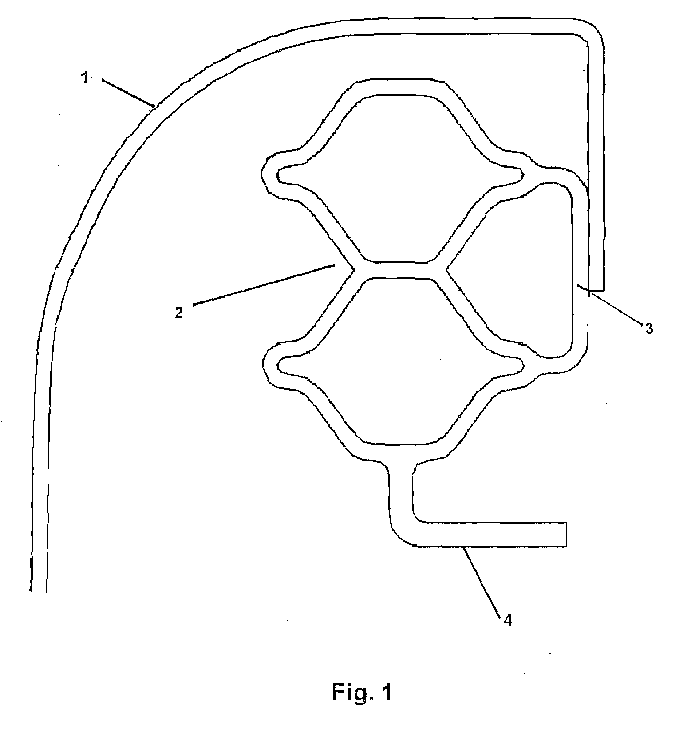

In Fig. 1 ist ein Ausführungsbeispiel des erfindungsgemäßen Fußgängerschutzes für ein Kraftfahrzeug zum Schützen von Personen bei einem Zusammenstoß mit dem Kraftfahrzeug, insbesondere beim Aufprall auf einen Kotflügel 1 dargestellt.

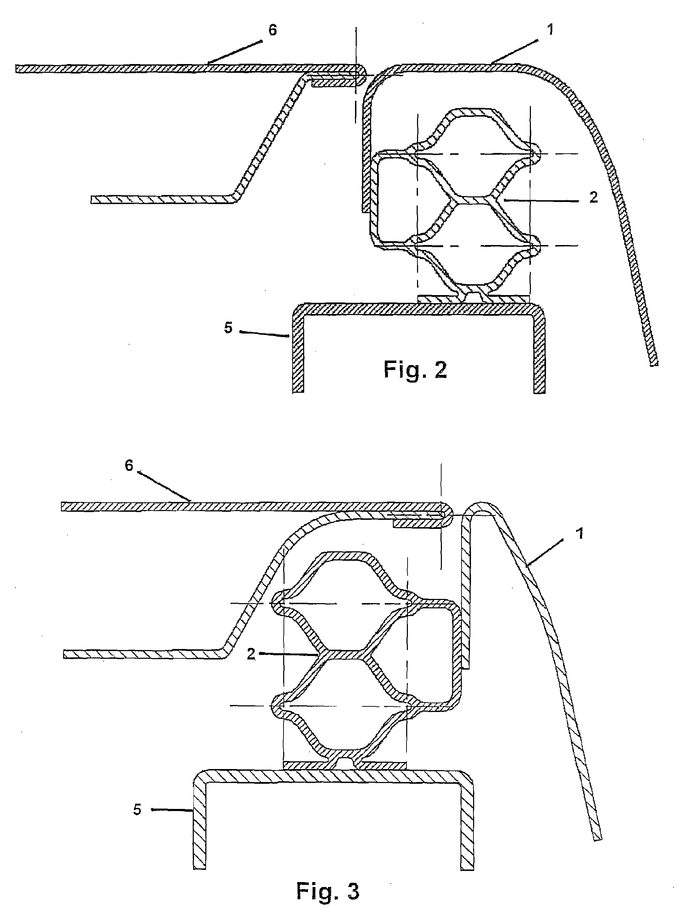

Wie es in Fig. 2 dargestellt ist, ist der Kotflügel 1 eines Kraftfahrzeuges mit dem oberen Hilfslängsträger 5 des Rahmens des Kraftfahrzeuges verbunden.

Diese Verbindung erfolgt gemäß Fig. 1 über ein dazwischen angeordnetes leistenförmiges oder lang gestrecktes Profilteil 2 mit wabenförmigem, d.h., im Wesentlichen sechseckigen Querschnitt, das zwischen dem Kotflügel 1, auf den eine Person aufprallt, und dem oberen Hilfslängsträger 5 vorgesehen ist. Die Anbindung des Profilteils 2 an den Kotflügel 1 erfolgt dabei über einen angeformten Flansch 3 und an den oberen Hilfslängsträger 5 über einen weiteren angeformten Flansch 4.

Bei dem in Fig. 2 dargestellten Ausführungsbeispiel befindet sich das Profilteil 2 im Bauraum unter dem Kotflügel 1. Wie es in Fig. 3 dargestellt ist, kann sich das Profilteil 2 aber auch im Bauraum unter der Frontklappe oder Motorhaube 6 befinden.

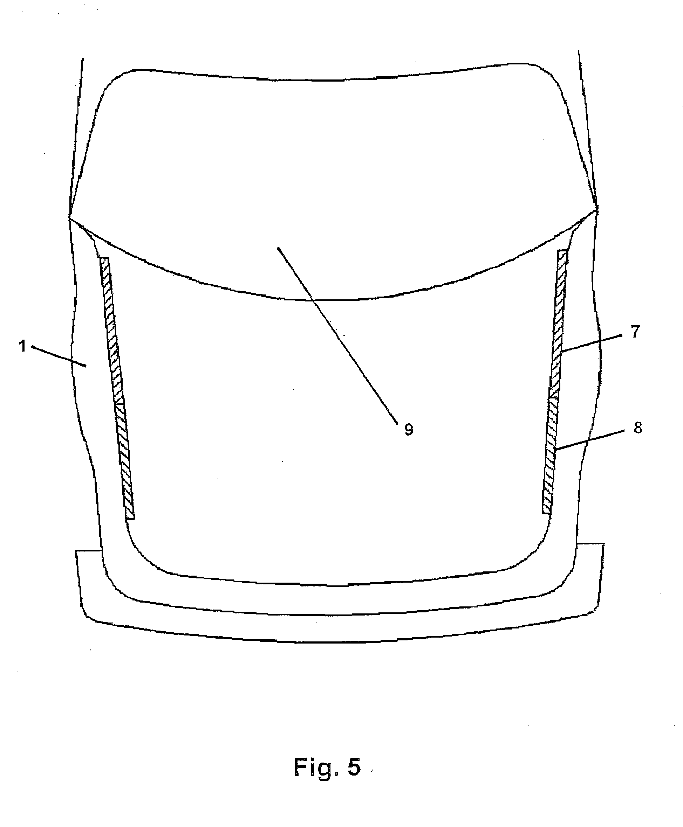

Wie es in Fig. 5 dargestellt ist und später im Einzelnen beschrieben wird, ist das leistenförmige Profilteil insbesondere im Motorraum des Kraftfahrzeuges entlang der Fuge zwischen dem Kotflügel 1 und dem oberen Hilfslängsträger 5, d.h. in Längsrichtung des Kraftfahrzeuges vorgesehen.

Das Profilteil 2 besteht aus einem Aluminiumwerkstoff im weichgeglühten Zustand gemäß DIN EN 515 Ziffer 4.2.

Unter einem wabenförmigen Querschnitt wird dabei ein Querschnitt verstanden, wie er beispielsweise in Fig. 1 dargestellt ist. Diese Querschnittsform besteht aus einem im Wesentlichen regelmäßigen Sechseck mit parallelen diametral gegenüberliegenden Seiten, wobei vorzugsweise an zwei gegenüberliegenden Ecken Ausrundungen, insbesondere kreisförmige Ausrundungen vorgesehen sind. Durch diese Ausgestaltung erhält die Wabe eine Art Zitronenform.

Die Wandstärke des Profilteils 2 mit Wabenform liegt bei 1 mm oder mehr. Dadurch ergibt sich ein Verformungshohlkörper mit einem bestimmten Verformungsverhalten, der dennoch eine Gesamtsteifigkeit hat, die ausreicht, um den Belastungen standzuhalten, die im normalen Gebrauch eines Fahrzeugs auftreten. Verformungen oder Beschädigungen durch aerodynamische Kräfte, beispielsweise bei hoher Fahrzeuggeschwindigkeit treten nicht auf. Die Profilform gewährleistet jedoch, dass eine örtliche Weichheit gegeben ist, die für ein Verformen, d.h. ein Nachgeben beim Aufprall einer Person sorgt.

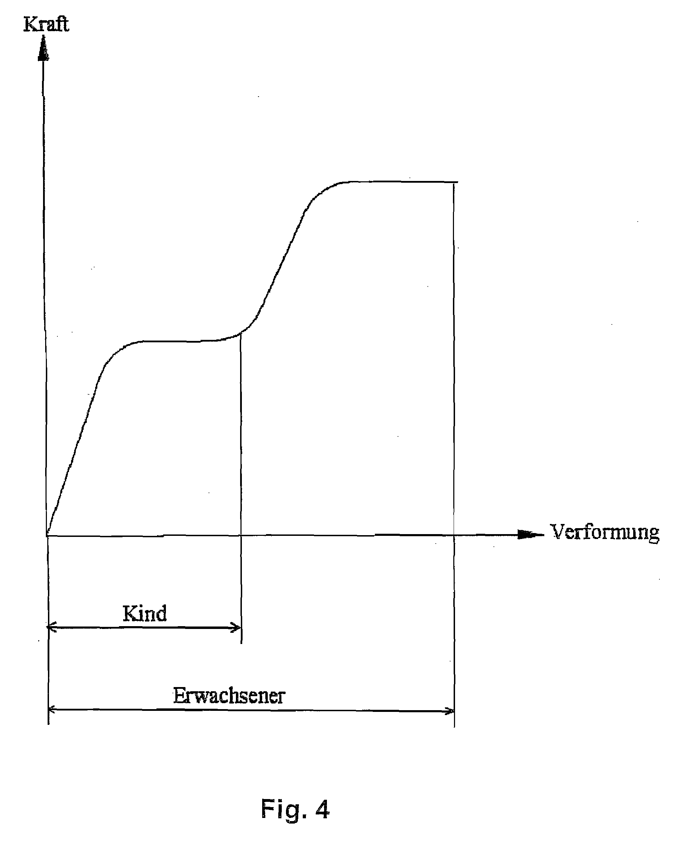

Das Verformungsverhalten eines Fußgängerschutzes mit dem in den Fig. 1 bis 3 dargestellten Aufbau ergibt sich aus Fig. 4.

Die Anbindung der entsprechenden Bauteile des Kraftfahrzeuges ist so ausgestaltet, dass sich eine linienförmige Energie absorbierende Funktion ergibt. Die Energieabsorption beschreibt dabei einen möglichst rechteckigen Kraftverformungsweg, wie es in Fig. 4 dargestellt ist. Die Ausgestaltung ist dabei zusätzlich torsionssteif, so dass bei Anlehnen einer Person an den Kotflügel die notwendige Steifigkeit vorhanden ist.

Das Profilteil 2 mit wabenförmigem Querschnitt oder Wabenstruktur ist insbesondere als Strangpressprofilteil ausgestaltet, wobei bei komplizierteren Geometrien ein Zwischenblech zur Vereinfachung der Verschraubung angeordnet werden kann.

Bei einem Aufprall, insbesondere bei einem Kopfaufprall wird die Wabenstruktur des Profilteils 2 verformt und Energie abgebaut. Ein besonderer Vorteil ist darin zu sehen, dass in der in Fig. 1 bis 3 dargestellten Weise das Profilteil als Mehrfachwabenhohlkörper, insbesondere Doppelwabenhohlkörper ausgebildet sein kann, um der Forderung nach verschiedenen Kraftniveaus für den Kopf eines Kindes oder eines Erwachsenen Rechnung zu tragen. Hierzu ist in Fig. 1 an der Seite des Kotflügels 1 eines so genannte weiche Wabe mit einer geringen Festigkeit vorgesehen, die beim Aufprall des Kopfes eines Kindes verformt wird und befindet sich dahinter eine so genannte harte Wabe mit einer Härte, die für den Aufprall des Kopfes eines Erwachsenen bemessen ist.

Das entsprechende Verformungsverhalten einer derartigen Doppelwabenkonstruktion ist in Fig. 4 dargestellt. Am Anfang der Verformung bei geringer Kraft ergibt sich ein rechteckiger Kraftverformungsweg auf Grund der vorderen Wabe, der dazu dient, die Aufprallenergie beim Aufprall des Kopfes des Kindes zu absorbieren, woraufhin sich der Verformungsbereich für den Aufprall eines Kopfes eines Erwachsenen anschließt, der gleichfalls einen rechteckigen Kraftverformungsweg beschreibt und auf die hinter der vorderen weichen Wabe liegende harte Wabe zurückzuführen ist.

Wie es in Fig. 5 dargestellt ist, unterscheiden sich der Aufprall eines Kindes und der Aufprall eines Erwachsenen auch dadurch, dass der Kopfaufschlagbereich des Kopfes eines Kindes weiter vorne am Fahrzeug liegt, während der Kopf eines Erwachsenen an einem hinteren Bereich des Fahrzeuges aufprallt. Um den hierdurch gegebenen Erfordernissen zu genügen, können bei dem erfindungsgemäßen Fußgängerschutz zwei verschiedene Profilteile, insbesondere zwei verschiedene Strangpressprofile vorne und hinten, d.h., an dem Bereich des Aufpralls des Kopfes eines Kindes und an dem Bereich des Aufpralls des Kopfes eines Erwachsenen vorgesehen sein.

Es ist aber auch möglich, ein Profilteil vorzusehen, das eine Härte hat, die für den Aufprall des Kopfes eines Kindes gewählt ist, die im hinteren Bereich jedoch durch Ausschäumen verfestigt ist.

Das gemäß der Erfindung vorgesehene Profilteil 2 hat gemäß Fig. 1 einen wabenförmigen Querschnitt, worunter ein im Wesentlichen sechseckiger Querschnitt zu verstehen ist, der an seinen Ecken abgerundet sein kann. Weiterhin kann die Form derart sein, dass zwei diametral gegenüberliegende Ecken der Querschnittsform kreisförmige Ausrundungen aufweist.

Im Obigen wurden Ausführungsbeispiele für die Anbindung insbesondere des Kotflügels an den Rahmen des Kraftfahrzeuges beschrieben.

Bei punktuellen Anbindungen, beispielsweise der Anbindungen eines Schlosses, wie des Motorhaubenschlosses ist der grundsätzliche Aufbau des erfindungsgemäßen Fußgängerschutzes ähnlich.

Bei punktuellen Anbindungsstellen ist jedoch zu berücksichtigen, dass es zusätzlich notwendig sein kann, dass Kraftniveau in Schutzrichtung niedriger als in einer dazu entgegengesetzten Richtung zu halten. Ein Beispiel dafür ist die Schlossanbindung des Motorhaubenschlosses, bei der eine Druckkraft von max. 3 kN für den Aufprall vorgesehen sein darf, während die Zugkraft mindestens 5 kN infolge von Sogkräften aus dem Fahrbetrieb betragen muss.

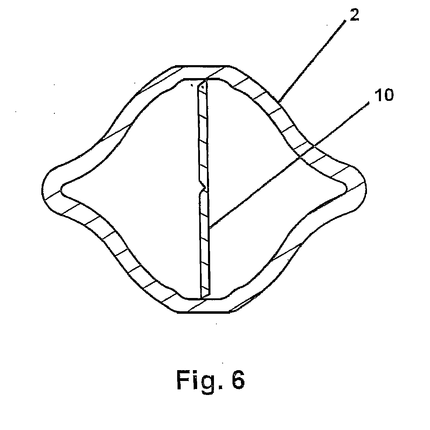

Um diesen Forderungen zu genügen, kann die Wabenstruktur des Profilteils durch beulende oder knickende Stege verstärkt sein. Beispiele hierfür sind in den Fig. 6, 7 und 8 dargestellt.

Bei dem in Fig. 6 dargestellten Ausführungsbeispiel ist als Steg ein Verstärkungsblech 10 vorgesehen, das in seiner Mitte eine Nut als Schwächungslinie aufweist. In Druckrichtung parallel zum Verstärkungsblech 10 erfolgt die Schutzfunktion während in Zugrichtung entgegengesetzt zur Druckrichtung das Verstärkungsblech 10 eine Verformung des wabenartigen Profilteils 2 verhindert.

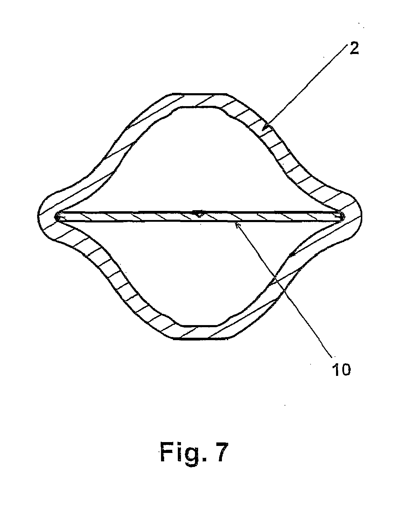

Fig. 7 zeigt ein Ausführungsbeispiel, bei dem ebenfalls ein Verstärkungsblech 10 vorgesehen ist, das in das Profilteil 2 senkrecht zur Kraftrichtung eingelegt ist. Bei diesem Ausführungsbeispiel ist bei einer Druckbeanspruchung senkrecht zum Verstärkungsblech 10 dieses wirkungslos, während es bei einer Zugbeanspruchung eine Verformung des wabenartigen Profils 2 verhindert. In dieser Weise wird erreicht, dass das Profil auf Druck weich und auf Zug hart reagiert.

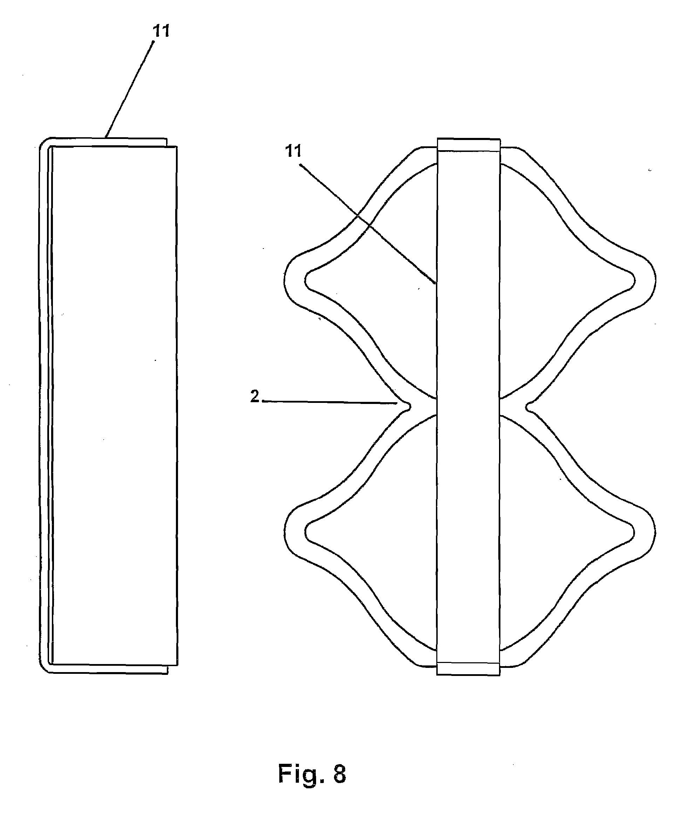

Fig. 8 zeigt schließlich ein Ausführungsbeispiel einer Doppelwabenkonstruktion mit einem seitlichen Verstärkungsblech 11.

Bei diesem Ausführungsbeispiel erfolgt die Schutzfunktion in Richtung der Druckkraft parallel zum Verstärkungsblech, das seitlich mit dem Profilteil 2 oben und unten verbunden ist. Bei einer Druckbeanspruchung knickt das Verstärkungsblech 11 aus, während es bei einer Zugbeanspruchung die Verformung des Profilteils 2 verhindert.

Die Verstärkungsbleche 10, 11 können im Strangpressprofil mitgestaltet sein oder als zusätzliches Bauteil eingesetzt sein.

## Patentansprüche

1. Fußgängerschutz für ein Kraftfahrzeug zum Schützen von Personen beim Zusammenstoß mit dem Kraftfahrzeug, **gekennzeichnet durch** wenigstens ein Profilteil (2) mit wabenförmigem Querschnitt, das zwischen dem Bauteil des Kraftfahrzeuges, auf das eine Person beim Zusammenstoß mit dem Kraftfahrzeug aufprallt, und einem damit verbundenen Bauteil (5) des Rahmens des Kraftfahrzeuges angeordnet ist und aus einem Aluminiumwerkstoff im weichgeglühten Zustand besteht.

2. Fußgängerschutz nach Anspruch 1, **dadurch gekennzeichnet, dass** das Profilteil (2) im Querschnitt mehrfach wabenförmig, insbesondere doppelwabenförmig ausgebildet ist, wobei die einzelnen Waben der Mehrfach- oder Doppelwabenform verschiedene Härten haben.

3. Fußgängerschutz nach Anspruch 1 oder 2, **dadurch gekennzeichnet, dass** Profilteile (2) mit verschiedener Härte im vorderen und im hinteren Bereich des Bauteils vorgesehen sind, auf das die Person aufprallt.

4. Fußgängerschutz nach einem der vorhergehenden Ansprüche, **dadurch gekennzeichnet, dass** ein Profilteil (2) mit geringerer Härte im vorderen Bereich und ein Profilteil mit höherer Härte im hinteren Bereich des Fahrzeuges angeordnet ist.

5. Fußgängerschutz nach einem der vorhergehenden Ansprüche, **dadurch gekennzeichnet, dass** das Profilteil (2) einen sechseckigen Querschnitt mit abgerundeten Ecken und kreisförmigen Ausrundungen an zwei diametral gegenüber liegenden Ecken hat.

6. Fußgängerschutz nach einem der vorhergehenden Ansprüche, **gekennzeichnet durch** ein Verstärkungsblech (10), das im Profilteil mit wabenförmigem Querschnitt angeordnet ist.

7. Fußgängerschutz nach Anspruch 6, **dadurch gekennzeichnet, dass** das Verstärkungsblech (10) parallel zur anliegenden Zug- und Druckbeanspruchungen angeordnet ist.

8. Fußgängerschutz nach Anspruch 6, **dadurch gekennzeichnet, dass** das Verstärkungsblech (10) senkrecht zur anliegenden Zug- und Druckbeanspruchungen angeordnet ist.

9. Fußgängerschutz nach einem der vorhergehenden Ansprüche, **gekennzeichnet durch** ein Seitenblech (11), das das Profilteil (2) außen umgreift.
